# EUROPEAN PATENT SPECIFICATION

(11) **EP 2 104 055 B1**
(45) Date of publication and mention of the grant of the patent: **03.07.2013**
(21) Application number: 09163877.5
(22) Date of filing: 30.08.2000
(51) Int. Cl.: G06K 7/00, G06F 3/033

(54) **Information management system**
Informationsverwaltungssystem
Systeme de gestion d'informations

(30) Priority: 30.08.1999 SE 9903052; 05.04.2000 SE 0001239
(43) Date of publication of application: 23.09.2009
(62) Divisional of application: 00959085.2
(73) Proprietor: Anoto AB, 227 22 Lund (SE)
(72) Inventor: Fåhraeus, Christer, 237 35 Bjärred (SE); Ericson, Petter, 211 49 Malmö (SE); Wiebe, Linus, 222 24 Lund (SE)
(74) Representative: Grönlund, Tim Linus Wilhelm

(56) References cited:
- EP-A2- 0 615 209
- EP-A2- 0 617 562
- US-A- 5 248 856
- US-A- 5 652 412
- US-A- 5 894 306

## Description

### Field of the Invention

The present invention relates to a system for electronic recording of handwritten information. Specifically, it relates to an eraser creating an electronic representation of an erased area.

### Background of the Invention

Writing boards are available in many different sizes and are used in many different situations, for example in a teaching situation or when a group of people are holding a meeting and wish to present and discuss solutions to various problems. In most situations one person writes on the writing board, while the others take down what is being written on the board in their own notebooks.

However, many people find it difficult to focus on what a lecturer is saying and take notes at the same time. As a result, they often miss parts of the lecture and are obliged to ask questions afterwards about subjects which the lecturer has already explained. There is also a risk that errors slip into the notes. In order to solve this problem, so-called electronic writing boards have recently been developed. An electronic writing board is a writing board having the characteristic that everything that is written on the board is "recorded" in a computer, so that the lecture can be distributed electronically to the audience, either during the lecture or afterwards. When a member of the audience has downloaded the lecture he can repeat it in real time or edit parts of it and supplement it with his own information, thereby creating his own lecture notes. Identical information about the topics covered during the actual lecture can thus be distributed to all members of the audience and there is no need to take notes during the lecture, which means that the audience can focus completely on what the lecturer is saying and writing on the board.

There are a number of basic principles with regard to electronic writing boards. A first basic principle is based on so-called touch sensitive surfaces. This principle is often found in so-called PDAs (Personal Digital Assistants) and is based on the idea that a coordinate pair of the writing position is generated when a pen is placed against the surface of the writing board with a force great enough for the writing surface of the board to contact a subjacent surface located close to the writing surface. The position where the pen is placed is measured analogously by means of voltage division, is converted from analogue to digital, and is subsequently processed so that a pair of coordinates, e.g. an x- and a y-coordinate of a single pen position is obtained. The position is measured several hundred times per second, making it possible to follow how lines are being drawn across the writing board. One problem associated with electronic writing boards based on the technology of touch sensitive surfaces is that problems occur with the planeness of the surface when the size of the writing board increases. The distance between the two surfaces which contact each other when the pen is placed on the writing board is often in the order of one millimeter or less. When the size of the writing board increases, the strength in the normal direction of the writing board decreases, making the writing board more sensitive to external mechanical influences. If one of the surfaces becomes deformed, it can lead to and even result in the writing board becoming unusable because of a short-circuit between the surfaces. Moreover, the cost of an electronic writing board of the touch sensitive type is proportional to its area.

EP 0 617 562 discloses a system for playing back continuous data inputted sequentially from a microphone/video camera or the like. The system stores input events inputted through a pen. The input events may be associated with an address of continuous data in storage when the input event is inputted. The pen input is made on a pressure-sensitive tablet. The pen may also be used in a virtual eraser mode for electronically erasing pen strokes. US 5,894,306 discloses another playback device, wherein audio and video input is recorded and may be associated to pen input on a touch panel. This system also comprises a virtual eraser.

Another basic principle of recording the position of a pen on an electronic writing board is based on light-beams which pass across the surface of the writing board at a short distance from the same and which are broken when the pen point is placed on the electronic writing board. This method is very similar to traditional touch-screens. Subsequently, a processor calculates a pair of coordinates based on the position where the light beams are broken and then follows the movement of the pen by means of successive position measurements. Such a system is disclosed in US 5,248,856, which also shows the use of an eraser within the system, wherein the position of the eraser is detected in the same way as described for the pen above. Yet another principle utilizes triangulation by means of sound or waves in the radio frequency range for determining the position of the pen. A drawback associated with systems utilizing triangulation is that there may be problems with interference between different electronic writing boards if several of them are placed next to each other.

Furthermore, analogue systems, such as triangulation or touch sensitive surfaces, share certain problems. One such problem is that the electronic writing board must be calibrated before it can be used. There are also limitations with regard to the resolution, depending on the accuracy with which the position can be measured with aid of the sensors. In analogue systems the resolution is often in the order of one percent of the total length in the vertical and the horizontal direction, respectively. Another major problem associated with all electronic writing boards of the above type is that they contain many expensive components which must have high reliability and which must be capable of operating with high precision, making them difficult and expensive to manufacture.

US 5,652,412 discloses an information recording apparatus for use with a paper that has a prerecorded pattern of pixels associated with a writing surface. Each pixel contains encoded, optically readable position information which identifies an absolute coordinate position on the writing surface. The information recording apparatus comprises a pen including means for detecting the position of the pen tip on the writing surface by optically reading the pixels and obtaining position information.

EP 0 615 209, against which the claims are delimited, discloses an information input device comprising an information writing section for writing on a writing medium and a position recognizing section for obtaining the absolute position of the information writing section on the writing medium. A position information holding device has sections, each of which holds unique position information corresponding to its point on the device. According to one embodiment, each section of the information holding device has a penetration member with a unique transmittance and an underlying reflection member. The information input device comprises a light-emitting circuit and a light-receiving circuit. The transmittance may be calculated based on detected intensity of light and thus, the absolute position may be recognized. The information input device may be switched between a writing mode and an erasing mode. When a closed curve is written on a paper sheet in the erasing mode, stroke information of the closed curve is recorded as special codes for an erasing region. An image on the paper sheet is erased by erasing the image in the closed curve using a normal eraser.

### Summary of the Invention

It is an object of the present invention to provide a solution to, or at least mitigate, the above-mentioned problems.

This object is achieved according to the invention by an eraser according to claim 1. Preferred embodiments of the invention are evident from the dependent claims.

The eraser may be used in a system for electronic recording of handwritten information, which system comprises a product provided with an optically readable position-coding pattern; a first device which is adapted to create, on the basis of the optically readable position-coding pattern, an electronic representation of information which is being written on the product; and a second device, which is adapted to create, on the basis of the optically readable position-coding pattern, an electronic representation of information which is being erased from the product with an eraser.

The product is preferably a writing board, but may also be e.g. a plastic film which is provided with the optically readable position-coding pattern and which, in use, is applied on a writing board.

Since everything that is written on the product and everything that is erased from the product is recorded electronically, this system can be used for "recording" what is happening on e.g. a whiteboard during a lecture, making it possible to display on a computer screen, in real time or at a later time, exactly how the information was created and changed on the board. This is made possible by comparatively simple and inexpensive means.

The possibility of recording the erasing of information is particularly valuable since it solves the problem of superimposed information which arises if one only records the information which is being written on the board.

The invention thus relates to an eraser, which comprises an erasing surface for erasing information from a writing board and a device for creating an electronic representation of an erased area on the writing board, the device for creating an electronic representation comprising a light sensitive detector which is adapted to record a two-dimensional image of a position-coding pattern on the writing board for a current eraser position, the position-coding pattern coding a position in two dimensions , wherein the position-coding pattern comprises dots arranged according to a virtual raster having raster lines, which raster lines define an x-axis and a y-axis of the position-coding pattern, and a processor, which is adapted to interpret the position-coding pattern imaged by the detector and transform it into a coordinate pair of the current position; said processor being further adapted to detect an angular position of said raster lines in relation to the two-dimensional image recorded by the detector; wherein the processor is adapted to determine said erased area on the writing board based on the current position, the detected angular position and knowledge of the size of the erasing surface of the eraser.

The erasing could be carried out in exactly the same way as the writing, i.e. by means of an eraser pen, which follows the trace of the previously written information to be erased. However, the erasing surface of an eraser is traditionally considerably larger than the writing surface of a writing pen in order to provide a more efficient erasing operation. This means that it may be necessary to keep track of an erasing area when information is erased from the product, instead of a single pen position like when information is written on the product.

The writing board can especially be of the whiteboard type, which has a white or light writing surface on which one writes using whiteboard pens.

The essential difference between the system and a prior art system is that the former has an optically readable position-coding pattern which makes it possible to determine where information is being written as well as what is being written. More specifically, by identifying, on the basis of the position-coding pattern, a large number of successive positions of the pen while the information is being written, it becomes possible to follow the movement of the pen from the moment the pen point is placed on the position-coding pattern until it is lifted from it, i.e. to make an electronic recording of everything that is written or drawn on the position-coding pattern.

The fact that the pattern is optically readable means that its capability to reflect, absorb, emit or transmit light is different from that of the background so that a light-sensitive detector can detect the pattern. However, it is not necessary for the pattern to be readable in visible light. It can, for example, be readable in the infrared range. In this way, the position-coding pattern can be made invisible to the user so that he will not find it distracting. Moreover, the ink and other matter applied to the board by the pen can be transparent to IR light, thereby not interfering with the position-coding pattern.

The position-coding pattern can either be applied to a writing board at the time of manufacturing or, for example, be printed on a plastic film which is later applied to a writing board.

Furthermore, the cost of applying the position-coding pattern to the writing board or of making a writing board with a position-coding pattern is very low. Consequently, writing boards of all sizes, especially those having a large area, are much cheaper to make than electronic writing boards of the type described in the introduction.

The resolution can be improved compared with the prior art, since much better accuracy can be obtained with an optically readable position-coding pattern than is provided by means of an analogue measurement of the position of a pen on the writing board.

The position-coding pattern can vary between different writing boards, making it possible to automatically keep track of the writing board on which the current information is being written or drawn. Alternatively, the devices for electronic recording of information can be provided with switches which the user switches over when changing writing boards. Since the writing boards are passive it is possible to avoid the above-mentioned problem of a plurality of active writing boards placed in proximity to each other interfering with each other.

The first and second devices can be implemented as two physically separate devices in two separate covers, which have essentially the same components and operate in essentially the same way. This alternative is advantageous in that most traditional whiteboard system has separate whiteboard pens and eraser.

Alternatively, the first and second devices can be integrated into one cover. The integration can be purely physical so that the cover comprises two sets of parallel components, one set for each function. It can also be a functional integration so that the devices have a common set of components, which are used alternatively for both functions. In the latter case, the user has to indicate when the function is to be switched and only one function (device) can be used at the time. In this case the first and second devices are implemented as one and the same device. As a further alternative some of the components may be doubled and some shared.

In a preferred embodiment, each of the first and second devices comprises a light sensitive detector adapted to detect a position-coding pattern on the product for a current position, and a communication means adapted to transfer positional information based on the position-coding pattern for the current position detected by the detector to at least one external unit.

The detector can be of any type which is capable of recording the position-coding pattern. However, it preferably comprises an area sensor which records images of the position-coding pattern.

The communication means can be implemented as a transmitter or a transceiver for wireless transfer of the positional information, e.g. an IR transmitter, an ultrasound transmitter or an RF transmitter. Preferably it is a short-range radio transceiver which operates according to the Bluetooth-standard. The external unit is preferably a computer, which has a receiver for receiving the positional information from the first and second devices. Subsequently, the information can be distributed from the external unit to the audience or other individuals who are interested in acquainting themselves with the information on the writing board. The distribution is suitably effected by way of a computer network, e.g. an intranet or the Internet. The positional information can also be transferred directly to a plurality of external units, such as the audience members' computers, so that it can be stored directly in these units while it is being written on the writing board.

The devices can be designed so that they essentially only transfer the position-coding pattern detected by the detector to the external unit, which, in this case, interprets the position-coding pattern. However, this requires a very large amount of bandwidth and high transmission speed. In order to reduce the amount of bandwidth required in connection with transmission, a certain amount of processing of the positional information, e.g. the localization of the symbols in the position-coding pattern, is preferably carried out in the devices. However, in a preferred embodiment the first and second devices comprise a processor, which is adapted to interpret the position-coding pattern detected by the detector and transform it into a pair of coordinates of the current position, the positional information transferred by the communication means comprising said coordinate pair.

The devices preferably comprise a memory for storing positional information for successive current positions, thereby enabling storage of at least part of the information which is being written on/erased from the writing board. In this way, interruptions of the transmission to the external unit can be tolerated. In order to reduce the size of the memory required, it is advantageous for the devices to comprise said processor which can interpret the information from the detector and convert it into a format requiring less memory.

In order further to reduce the amount of information which must be transferred to the external unit, said processor in the first and second devices is preferably adapted to transform pairs of coordinates of the successive current positions into trains of polygons, the positional information transferred by the communication means comprising said trains of polygons.

More particularly, the processor may first transfer the pair of coordinates of a detected position, then one or more vectors indicating the distance and the direction to a subsequently detected position, and then again the pair of coordinates of a detected position. If the user draws a straight line the processor need not transfer the pairs of coordinates of every position from the start of the line to the end of the line, but needs only transfer the pair of coordinates of the starting position of the line and the vector defining the end thereof. The pairs of coordinates, i.e. the absolute position, should preferably be transferred at least every second, in order to provide an exact reproduction of the written information.

The electronic representation of the information can thus consist of anything from an electronic representation of the position-coding pattern to a compressed description of the movement of the pen/eraser on the board.

The processor may also transfer the time at which the positional information is detected so that the positional information can be synchronized with other information recorded simultaneously.

In one embodiment the position-coding pattern on the product comprises a first subset of an absolute position-coding pattern, said first subset coding coordinates for points within a first coordinate area on an imaginary surface, which comprises all points which the absolute position-coding pattern has the capacity of coding, said first coordinate area being dedicated to receive handwritten information.

The position-coding pattern on the product may thus be designed in such a way that it can code more positions than are needed on the writing board. More particularly, it may be part of an information handling system, where different coordinate areas are dedicated for different purposes. In this way, electronic positional information from a writing board can always be recognized by means of the absolute coordinates and treated accordingly.

In a further embodiment at least one position, which is coded by the position-coding pattern, is dedicated to a function, which is to be carried out in connection with the electronic recording of handwritten information.

The user may want to send specific commands or messages to the external unit, which receives the positional information. This could be achieved in a neat way by reading the position-coding pattern in one or more predefined positions on the product specifically dedicated for this purpose. The user may for instance want to erase all information on the writing board. Instead of using the eraser and recording all positions erased all over the writing board, he may instruct the external unit to turn to a new blank page by placing the pen in a specific position on the writing board. When the external unit receives the coordinate pair coded by the position-coding pattern in this position, it recognizes the coordinate pair as a command for turning to a new page and consequently not as part of the information written on the writing board.

Many functions can be implemented in this way. However, different color functions, which indicate to the external unit the color of the pen which is used at the moment for writing on the writing board, would be particularly useful. Other functions qualifying the pen strokes on the writing board could also be useful, e.g. the thickness of the pen point or the use of a calligraphic pen.

In a useful embodiment the at least one position, which is dedicated to a function, is coded by a second subset of the larger absolute position-coding pattern, said second subset coding coordinates for at least one point within a second coordinate area on the imaginary surface which is dedicated to said function.

This second subset need not code positions that are continuous with the positions coded by the first subset. Neither do they have to have any relationship to the actual positions on the writing board.

The first device can advantageously be implemented as a device which is attached to an ordinary writing board pen or a whiteboard pen. To this end, it advantageously has a holder for such a pen. The advantage of this embodiment is that the device can be moved between different pens, which means that only one device is needed for each writing board even if one or more users want to use different pens or if some pens stop working and must be replaced.

The holder can be any holder which is suitable for attaching the pen to the holder or vice versa. It could be a mechanical holder, a magnetic holder, an adhesive holder or the like.

Alternatively, the first device can be implemented so that it also comprises the pen for writing on the writing board. In this case, the pen constitutes an integral part of the device. An advantage of this embodiment would be that it is easier to fix the relative positions of the pen and the detector.

Correspondingly, the second device can be implemented as a device which is attached to the eraser or which comprises the latter as an integral part.

The system preferably also comprises software for displaying the information on the writing board on a screen, on the basis of the electronic representation of the information which is being written on and erased from the writing board. This software is thus adapted to create, on the basis of the recorded pen and eraser positions, an electronic image, or image sequence, which images the information on the writing board. The software can be installed in a central unit which is connected to a large screen so that several people can watch the same screen, or in the audience members' computers so that each member of the audience can obtain a personal copy of the notes made on the writing board, or in some other computer capable of displaying the information on a screen. The information is preferably distributed in the form of trains of polygons, so that it is only necessary to transfer a small amount of data. Subsequently, the software represents the transferred trains of polygons as curves in a generated electronic representation, or "image", of the information on the writing board.

In a preferred embodiment, the system also comprises a microphone for recording speech in connection with the writing and erasing of information on the writing board as well as means for transferring the recorded speech to the external unit. This enables recording of, for example, the lecturer's explanations of the information which is being written on the writing board, which, consequently, can also be transferred to the external unit for distribution to the audience. If desired, the system can be supplemented with a camera which records the movements of the person who is writing on the writing board. In this way, supplementary image information can also be distributed in order to obtain an optimal reproduction of the lecture at a later time.

Advantageously, the system also comprises a projector which is adapted to project supplementary information onto the writing board. This supplementary information can, for example, consist of whole images, or parts of images to which the lecturer subsequently adds handwritten notes on the writing board, thereby providing increased flexibility in connection with the presentation.

The projector is advantageously adapted to display supplementary information recorded electronically on a second writing board in a second, remote system. The respective positions of the pen and the eraser noted on the writing board in the second system are thus transferred by the intermediary of a computer to the projector in the first system and are shown on the board of the first system and vice versa. This makes it possible to "write on each other's writing boards" and to hold joint conferences and meetings even at large geographical distances. The complete information on each writing board is then transferred to the external unit or units, so that they will contain all the information. The information on the different writing boards can of course also be supplemented with speech and images of the users of the different writing boards.

### Brief Description of the Drawings

Preferred embodiments of the invention will be described in more detail below with reference to the accompanying drawings.

Fig. 1 schematically shows a writing board according to an embodiment.

Fig. 2 schematically shows an enlarged part of the writing board in fig. 1.

Fig. 3 schematically shows how the symbols of the position-coding pattern may be designed.

Fig. 4 schematically shows an example of 4 x 4 symbols which are used for coding one position.

Fig. 5 schematically shows the whiteboard with its different subsets of the position-coding pattern and the corresponding coordinate areas on the imaginary surface.

Fig. 6 schematically shows a first device according to an embodiment.

Fig. 7 schematically shows a second device according to an embodiment of the present invention.

Fig. 8 schematically shows an embodiment where the first and second devices are implemented as one and the same device.

Fig. 9 shows a block diagram of the component parts of the system according to an embodiment.

### Description of Preferred Embodiments

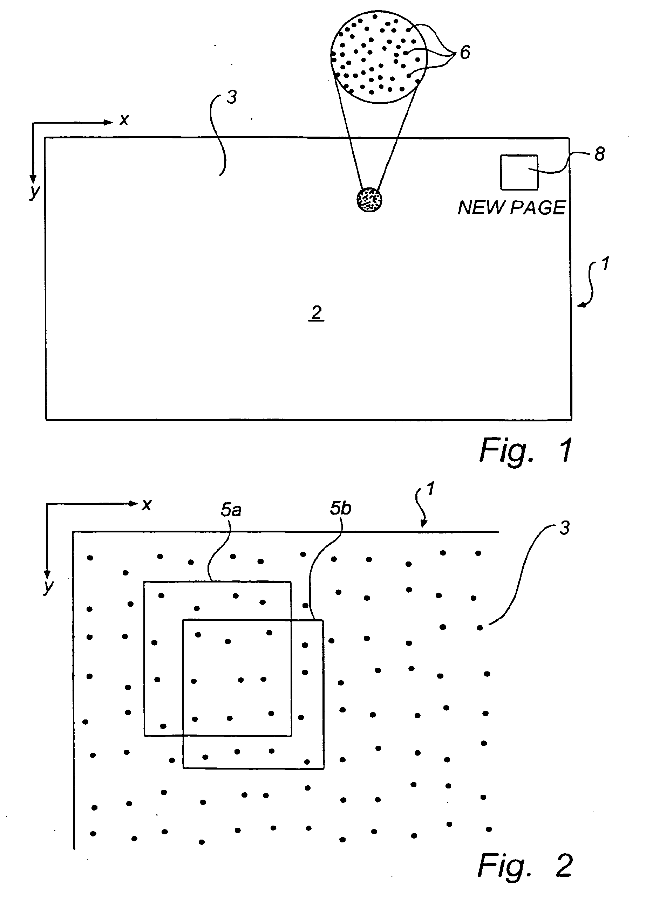

Fig. 1 shows a writing board 1, which can be a whiteboard, and which has a writing surface 2. The writing surface 2 is provided with a position-coding pattern 3, which is made up of small dots 7 which are arranged in a manner which will be described in more detail in the following. For the sake of clarity, the position-coding pattern is only shown on a small part of the writing surface, which moreover has been enlarged.

In a real embodiment the position-coding pattern 3 extends across the entire writing surface and the dots are smaller so that a better position resolution is obtained.

The position-coding pattern can be created in a number of different ways. One way of creating a position-coding pattern where each position is coded with one symbol is described in US 5,852,434. However, in the present invention, each position is advantageously coded with the aid of a plurality of symbols and the coding is such that each symbol in the position-coding pattern contributes to the coding of more than one position. This means that two adjoining positions share some symbols. In this way, a higher resolution is achieved and the detection becomes easier since the individual symbols can be less complex. This type of overlapping or floating position-coding pattern can be created with the aid of a computer. A special way of generating such a floating position-coding pattern is described in Applicant's previous Swedish Patent Application No. 9901954-9 which was filed on the 28th of May 1999, published as WO 00/73983 and SE 9901954.

In the following a preferred position-coding pattern is described by reference to figs 2-4. The position-coding pattern is the object of Applicant's Swedish patent Application No. 9903541-2 which was filed on the first of October 1999, published as WO 01/26082 and SE 9903541.

Fig. 2 shows an enlarged part of the writing board, which on its surface 2 is provided with the optically readable position-coding pattern 3 enabling position determination.

The position-coding pattern comprises a virtual raster, which thus neither is visible to the human eye nor can be detected directly by a device which is to determine positions on the surface, and a plurality of symbols 4, which each are capable of assuming one of four values "1"-"4" as will be described below.

The position-coding pattern is arranged in such manner that the absolute coordinates of a point on an imaginary surface, which is to be described in the following, is coded by the symbols on a partial surface on the writing surface. A first and a second partial surface 5a, 5b are indicated by dashed lines in Fig. 2. That part of the position-coding pattern (in this case 4x4 symbols) which is to be found on the first partial surface 5a codes the coordinates of a first point, and that part of the position-coding pattern which is to be found on the second partial surface 5b codes the coordinates of a second point on the imaginary surface. Thus the position-coding pattern is partially shared by the adjoining first and second positions. Such a position-coding pattern is in this application referred to as "floating".

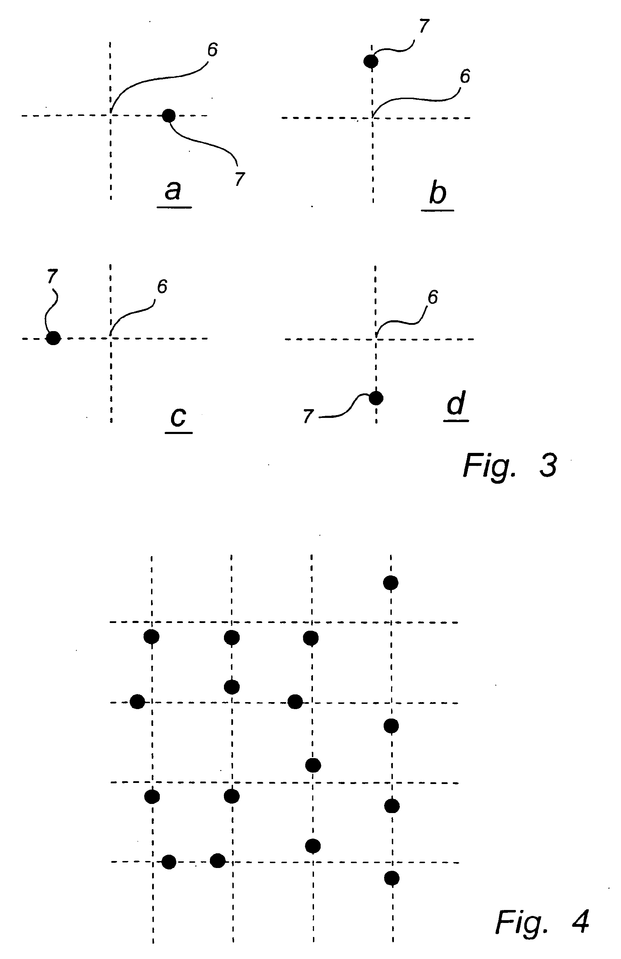

Figs 3a-d show an embodiment of a symbol which can be used in the position-coding pattern according to the invention. The symbol comprises a virtual raster point 6 which is represented by the intersection between the raster lines, and a marking 7 which has the form of a dot. The value of the symbol depends on where the marking is located. In the example in Fig. 3, there are four possible positions, one on each of the raster lines extending from the raster points. The displacement from the raster point is equal to all values. In the following, the symbol in Fig. 3a has the value 1, in Fig. 3b the value 2, in Fig. 3c the value 3 and in Fig. 3d the value 4. Expressed in other words, there are four different types of symbols.

It should also be mentioned that the markings and the symbols may have a different form. Dots of four different sizes or four different forms may, for instance, be arranged in a regular raster.

Each symbol can thus represent four values "1-4". This means that the position-coding pattern can be divided into a first position code for the x-coordinate, and a second position code for the y-coordinate. The division is effected as follows:

| Symbol value | x-code | y-code |
|---|---|---|
| 1 | 1 | 1 |
| 2 | 0 | 1 |
| 3 | 1 | 0 |
| 4 | 0 | 0 |

Thus, the value of each symbol is translated into a first digit, in this case bit, for the x-code and a second digit, in this case bit, for the y-code. In this manner, two completely independent bit patterns are obtained. The patterns can be combined to a common pattern, which is coded graphically by means of a plurality of symbols according to Fig. 3.

Each position is coded by means of a plurality of symbols. In this example, use is made of 4x4 symbols to code a position in two dimensions, i.e. an x-coordinate and a y-coordinate.

The position code is made up by means of a number series of ones and zeros which have the characteristic that no sequence of four bits appears more than once in the series. The number series is cyclic, which means that the characteristic also applies when one connects the end of the series to the beginning of the series. Thus a four-bit sequence always has an unambiguously determined position in the number series.

The series can maximally be 16 bits long if it is to have the above-described characteristic for sequences of four bits. In this example, use is, however, made of a series having a length of seven bits only as follows:
"0 0 0 1 0 1 0".

This series contains seven unique sequences of four bits which code a position in the series as follows:

| Position in the series | Sequence |
|---|---|
| 0 | 0001 |
| 1 | 0010 |
| 2 | 0101 |
| 3 | 1010 |
| 4 | 0100 |
| 5 | 1000 |
| 6 | 0000 |

For coding the x-coordinate, the number series is written sequentially in columns across the entire surface that is to be coded. The coding is based on the difference or position displacement between numbers in adjoining columns. The size of the difference is determined by the position (i.e. with which sequence) in the number series, in which one lets the column begin. More specifically, if one takes the difference modulo seven between on the one hand a number which is coded by a four-bit sequence in a first column and which thus can have the value (position) 0-6, and, on the other hand, a corresponding number (i.e. the sequence on the same "level") in an adjoining column, the result will be the same independently of where along the two columns one makes the comparison. By means of the difference between two columns, it is thus possible to code an x-coordinate which is constant for all y-coordinates.

Since each position on the surface is coded with 4x4 symbols in this example, three differences (having the value 0-6) as stated above are available to code the x-coordinate. Then the coding is carried out in such manner that of the three differences, one will always have the value 1 or 2 and the other two will have values in the range 3-6. Consequently no differences are allowed to be zero in the x-code. In other words, the x-code is structured so that the differences will be as follows: (3-6) (3-6) (1-2) (3-6) (3-6) (1-2) (3-6) (3-6) (1-2)... Each x-coordinate thus is coded with two numbers between 3 and 6 and a subsequent number which is 1 or 2. If three is subtracted from the high numbers and one from the low, a number in mixed base will be obtained, which directly yields a position in the x-direction, from which the x-coordinate can then be determined directly, as shown in the example below.

By means of the above described principle, it is thus possible to code x-coordinates 0,1,2..., with the aid of numbers representing three differences. These differences are coded with a bit pattern which is based on the number series above. The bit pattern can finally be coded graphically by means of the symbols in Fig. 2.

In many cases, when reading 4x4 symbols, it will not be possible to produce a complete number which codes the x-coordinate, but parts of two numbers. Since the least significant part of the numbers is always 1 or 2, a complete number, however, can easily be reconstructed.

The y-coordinates are coded according to the same principle as used for the x-coordinates. The cyclic number series is repeatedly written in horizontal rows across the surface which is to be position-coded. Just like in the case of the x-coordinates, the rows are allowed to begin in different positions, i.e. with different sequences, in the number series. However, for y-coordinates one does not use differences but codes the coordinates with numbers that are based on the starting position of the number series on each row. When the x-coordinate for 4x4 symbols has been determined, it is in fact possible to determine the starting positions in number series for the rows that are included in the y-code in the 4x4 symbols. In the y-code the most significant digit is determined by letting this be the only one that has a value in a specific range. In this example, one lets one row of four begin in the position 0-1 in the number series to indicate that this row relates to the least significant digit in a y-coordinate, and the other three begin in the position 2-6. In y-direction, there is thus a series of numbers as follows: (2-6) (2-6) (2-6) (0-1) (2-6) (2-6) (2-6) (0-1) (2-6)... Each y-coordinate thus is coded with three numbers between 2 and 6 and a subsequent number between 0 and 1.

If 0 is subtracted from the low number and 2 from the high, one obtains in the same manner as for the x-direction a position in the y-direction in mixed base from which it is possible to directly determine the y-coordinate.

With the above method it is possible to code 4 x 4 x 2 = 32 positions in x-direction. Each such position corresponds to three differences, which gives 3 x 32 = 96 positions. Moreover, it is possible to code 5 x 5 x 5 x 2 = 250 positions in y-direction. Each such position corresponds to 4 rows, which gives 4 x 250 = 1000 positions. Altogether it is thus possible to code 96000 positions. Since the x-coding is based on differences, it is, however, possible to select in which position the first number series begins. If one takes into consideration that this first number series can begin in seven different positions, it is possible to code 7 x 96000 = 672000 positions. The starting position of the first number series in the first column can be calculated when the x-coordinate has been determined. The above-mentioned seven different starting positions for the first series may code different sheets of paper or writing surfaces on a product.

With a view to further illustrating the invention according to this embodiment, here follows a specific example which is based on the described embodiment of the position code.

Fig. 4 shows an example of an image with 4x4 symbols which are read by a device for position determination.

These 4x4 symbols have the following values:

| | | | |
|---|---|---|---|
| 4 | 4 | 4 | 2 |
| 3 | 2 | 3 | 4 |
| 4 | 4 | 2 | 4 |
| 1 | 3 | 2 | 4 |

These values represent the following binary x- and y-code:

| | | | | | | | | |
|---|---|---|---|---|---|---|---|---|
| x-code: | | | | | y-code: | | | |
| 0 | 0 | 0 | 0 | | 0 | 0 | 0 | 1 |
| 1 | 0 | 1 | 0 | | 0 | 1 | 0 | 0 |
| 0 | 0 | 0 | 0 | | 0 | 0 | 1 | 0 |
| 1 | 1 | 0 | 0 | | 1 | 0 | 1 | 0 |

The vertical x-sequences code the following positions in the number series: 2 0 4 6. The differences between the columns will be -2 4 2, which modulo 7 gives: 5 4 2, which in mixed base codes position (5-3) x 8 + (4-3) x 2 + (2-1) = 16 + 2 +1 = 19. Since the first coded x-position is position 0, the difference which is in the range 1-2 and which is to be seen in the 4x4 symbols is the twentieth such difference. Since furthermore there are a total of three columns for each such difference and there is a starting column, the vertical sequence furthest to the right in the 4x4 x-code belongs to the 61st column in the x-code (3 x 20 + 1 = 61) and the one furthest to the left belongs to the 58th.

The horizontal y-sequences code the positions 0 4 1 3 in the number series. Since these series begin in the 58th column, the starting position of the rows are these numbers minus 57 modulo7, which yields the starting positions 6 3 0 2. Translated into digits in the mixed base, this will be 6-2, 3-2, 0-0, 2-2 = 4 1 0 0 where the third digit is the least significant digit in the number at issue. The fourth digit is then the most significant digit in the next number. In this case, it must be the same as in the number at issue. (An exceptional case is when the number at issue consists of the highest possible digits in all positions. Then one knows that the beginning of the next number is one greater than the beginning of the number at issue.)

The position of the four-digit number will then in the mixed base be 0x50 + 4x10 + 1x2 + 0x1 = 42.

The third row in the y-code thus is the 43rd which has the starting position 0 or 1, and since there are four rows in all on each such row, the third row is number 43x4=172.

Thus, in this example, the position of the uppermost left corner for the 4x4 symbol group is (58,170).

Since the x-sequences in the 4x4 group begin on row 170, the x-columns of the entire pattern begin in the positions of the number series ((2 0 4 6) - 169) modulo 7 = 1 6 3 5. Between the last starting position (5) and the first starting position, the numbers 0-19 are coded in the mixed base, and by adding up the representations of the numbers 0-19 in the mixed base, one obtains the total difference between these columns. A naive algorithm to do so is to generate these twenty numbers and directly add up their digits. The resulting sum is called s. The sheet of paper or writing surface will then be given by (5-s)modulo7.

In the example above, an embodiment has been described, in which each position is coded with 4 x 4 symbols and a number series with 7 bits is used. Of course, this is but an example. Positions can be coded with a larger or smaller number of symbols. The number of symbols need not be the same in both directions. The number series can be of different length and need not be binary, but may be based on another base. Different number series can be used for coding in x-direction and coding in y-direction. The symbols can have different numbers of values.

In the example above, the marking is a dot but may, of course, have a different appearance. For example, it may consist of a dash which begins in the virtual raster point and extends therefrom to a predetermined position. It may also consist of a rectangle, a triangle, or any other simple geometrical form. The marking could be filled out or not.

In the example above, the symbols within a square partial surface are used for coding a position. The partial surface may have a different form, such as hexagonal. The symbols need not be arranged in rows and columns at an angle of 90° to each other but can also be arranged in some other manner.

For the position code to be detected, the virtual raster must be determined. This can be carried out by studying the distance between different markings. The shortest distance between two markings must derive from two neighboring symbols having the value 1 and 3 (horizontal) or 2 and 4 (vertical) so that the markings are located on the same raster line between two raster points. When such a pair of markings has been detected, the associated raster points can be determined with knowledge of the distance between the raster points and the displacement of the markings from the raster points. When two raster points have once been located, additional raster points can be determined by means of measured distances to other markings and with knowledge of the relative distance of the raster points.

A large number of unique positions and more particularly the absolute coordinates for these positions can be coded by the position coding pattern above. All the positions or points which can be coded by means of the position coding pattern create together an imaginary surface. Different parts of this imaginary surface can be dedicated for different purposes. One part of the imaginary surface can for instance be dedicated as a writing surface or even a whiteboard writing surface. Other parts can be dedicated to different functions. The corresponding subset of the position-coding pattern can then be placed on the product in order to implement the specific function. The subset can be placed in any position on the product. Thus it is not necessary that the position or positions coded by this subset relate to the position on the product. In the currently preferred embodiment the nominal interspace between the dots is 0.3 millimeters. Any part of the position-coding pattern that comprises 6 x 6 dots defines the absolute coordinates of a point on the imaginary surface. Each point on the imaginary surface is consequently defined by a subset of 1.8 mm x 1.8 mm of the position-coding pattern. By determining the 6 x 6 dots' position on a sensor in a device which is used for detecting the pattern, a position on the imaginary surface can be calculated by interpolation with a resolution of 0.03 mm. Since each point is coded by 6 x 6 points, each of which can assume one of four values, 2⁷² points in total can be coded. This corresponds to a surface of 4.6 million km² if the above-mentioned nominal interspace between the dots is assumed.

Standard offset printing technique can be used for printing the position-coding pattern. Ordinary carbon based ink or any other IR-absorbing ink can preferably be used because then any other color can be used on top of the position-coding pattern without disturbing the detecting thereof.

A surface provided with the above-described position-coding pattern will be perceived as a slightly grayish surface (1-3 % of blackness).

It goes with out saying that fewer or more dots can be used for defining a point on the imaginary surface and that a larger or smaller interspace between the dots can be used in the pattern. The example above is not more than an example of the currently preferred implementation of the position-coding pattern.

As already mentioned, the writing board can be provided with a first subset of the position-coding pattern. This first subset is provided on the larger part of the writing board in fig. 1. It may, however, also be provided with a second subset of the position-coding pattern, the second subset coding at least one coordinate pair, but preferably several coordinate pairs, which are to be interpreted as a function or a command instead of as part of handwritten information. In fig 1, the second subset of the position-coding pattern is marked as a box 8 with dashed lines. Preferably the range and meaning of the second subset is clearly marked to the user, e.g. by text. The writing board may comprise several such function/command boxes, which are provided with other dedicated subsets of the position-coding pattern. The coordinate pairs can be recognized as commands/functions in either the device which reads the position-coding pattern or the external unit to which the positional information is sent.

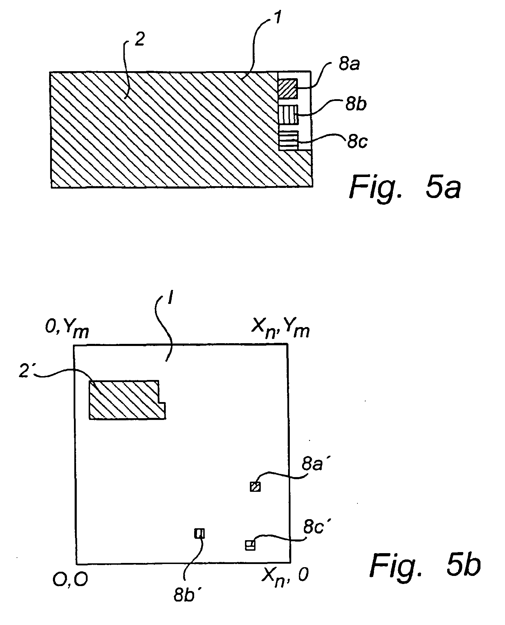

Fig 5a shows a writing board 1 which is provided with a position-coding pattern. The different subsets of the position-coding pattern are indicated with different patterns in the figure. The writing board has a writing area 3 with a first subset of the position-coding pattern and three command boxes 8a-c with a second to a fourth subset of the position-coding pattern. Fig 5b shows the corresponding different coordinate areas on the imaginary surface I, the coordinate areas being designated with the same reference numerals with the addition of the '-character. The imaginary surface consists of the coordinate area (0,0; xn,0; xn,ym; 0,ym). It is evident that the position-coding pattern is not continuous over the whole writing board, but the different subsets correspond to different parts of the imaginary surface. The different coordinate areas on the imaginary surface are dedicated to different functions or commands. This is advantageous in that a new lay out of the whiteboard could be created without any need for modification of the devices which should interpret the positional information from the writing board.

Alternatively the whole writing board could be provided with a subset of the position-coding pattern coding the coordinates of points in a coherent coordinate area on the imaginary surface.

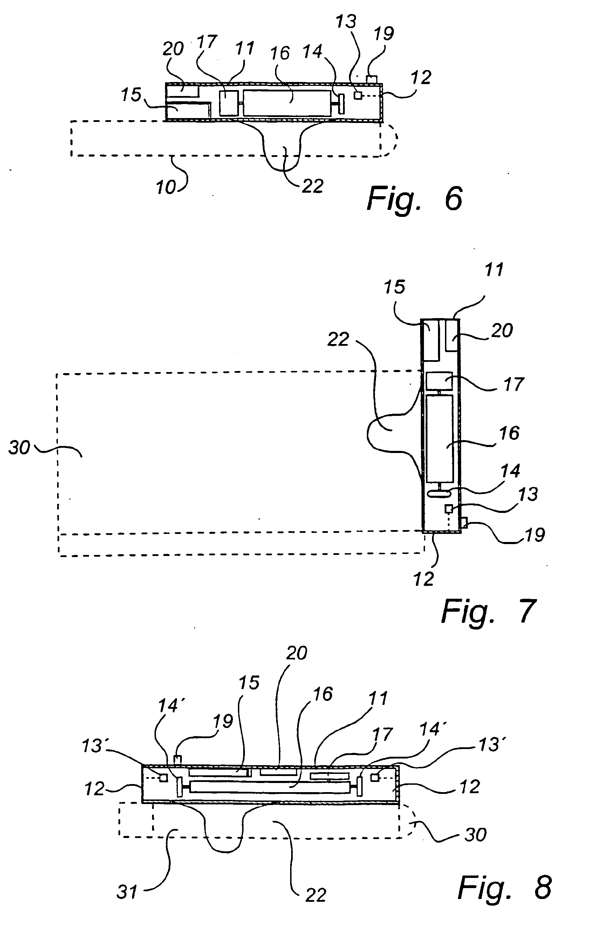

Fig. 6 shows an embodiment of a first position-sensing device used for electronic recording of what is being written or drawn on the writing board in Fig. 1 with the aid of a pen 10, to which the device is attached. The device comprises a casing 11 which has an opening 12 in one end. The casing 11 essentially contains an optics part, an electronic circuitry part, and a power supply.

The optics part comprises at least one light-emitting diode 13 for illuminating the surface 1 of the writing board and a light-sensitive detector 14, such as a CCD or CMOS sensor, for detecting the position-coding pattern. More specifically, the detector is adapted to record a two-dimensional image comprising the position-coding pattern 3. The optics part may also comprise a lens system (not shown).

The power supply to the device is obtained from a battery 15, which is mounted in a separate compartment in the casing 11.

The electronic circuitry part contains a processor 16 which is programmed to read images, preferably at a frequency of 100 images per second, from the detector 14 and to carry out position determination on the basis of these images. More specifically, the processor first locates the dots in the image and then determines the pair of coordinates to which the dots correspond. Furthermore, the processor 16 may comprise software for transforming a succession of coordinate pairs into a train of polygons so that the positional information can be stored and transferred more efficiently.

The processor also comprises a clock so that the positional information can be supplemented by a time indication.

Moreover, the electronic circuitry part comprises a memory 17 for storing positional information in the form of coordinate pairs or trains of polygons or in some other suitable way. The electronic circuitry part also comprises a communication means which in this case is implemented as a transceiver 20 for wireless transfer, preferably using a short-range radio link according to the Bluetooth standard, of the positional information from the device to an external unit, such as a computer. The positional information is retrieved from the memory 17, in which it remains for a certain time subsequent to the transmission to enable it to be re-transmitted in case of a transmission interruption or error. In connection with the transfer to the computer, information about the color of the pen 10 can also be transferred to enable the software in the computer to recreate an electronic copy of the text on the writing board 1 using the same colors. The color information can be transmitted in the form of one or more coordinate pairs, which have been predefined as indicating a specific color. Also predefined commands, e.g. store the current information and begin on a new page or change from eraser mode to pen mode, can be transmitted to the computer in the form of coordinate pairs.

Furthermore, the device comprises a holder 22 in which the pen 10 can be attached as shown by dashed lines in Fig. 5. The holder can be designed in many different ways depending on, inter alia, the type of pen.

The device also comprises a button 19 for activating the device.

Fig. 7 shows a second position-sensing device intended to be used for electronic recording of what is being erased with the aid of an eraser 30 from the writing board in Fig. 1. The eraser 30 is indicated by dashed lines. The structure of the device is the same as that of the device in Fig. 6. Corresponding parts are referred to by the same reference numerals. The erased area on the writing board could be determined based on the angular position of the position-coding pattern on the sensor and with knowledge of the size of the erasing surface of the eraser.

It would also be possible to use only one device and to move it from the pen to the eraser when needed. This alternative presupposes that the holder could be adapted to both the pen and the eraser. The device must also be provided with some means, e.g. a simple switch, for indicating if it is used with the eraser or the pen. The switching between the eraser mode and the pen mode could alternatively be carried out by means of a "function" on the writing board, i.e. by detecting a subset of the position-coding pattern dedicated for indicating use of the position-sensing device together with the eraser or the pen.

A further possibility would be to have a pen with an integrated eraser. The pen could have a pen point at one end and an eraser at the other end. In such a case the position-sensing device could have two sensors, one at each end so that the sensors are used alternatively depending on whether the pen point or the eraser is directed towards the writing board. In this case no switch is needed because each detector is only used for one purpose.

A position-sensing device with two detectors could also be used together with an ordinary pencil with an eraser at the rear end, when the pencil and the eraser are used on an ordinary writing surface, e.g. a paper, which is provided with a position-coding pattern.

Fig 8 shows an embodiment of a position-sensing device with two detectors 14' and 14" for detecting the current position of a pen point 30 and an eraser 31, respectively. The structure and the function of the device is substantially the same as that of the device in Fig. 5 except for that there are two detectors and two associated light emitting diodes 13' and 13''. Corresponding parts are referred to by the same reference numerals.

The pen point and the eraser can also be arranged at the same end of a pen. In such a case a single detector could be used for alternatively recording the current eraser position and the current pen position. A means for switching between the eraser mode and the pen mode is needed.

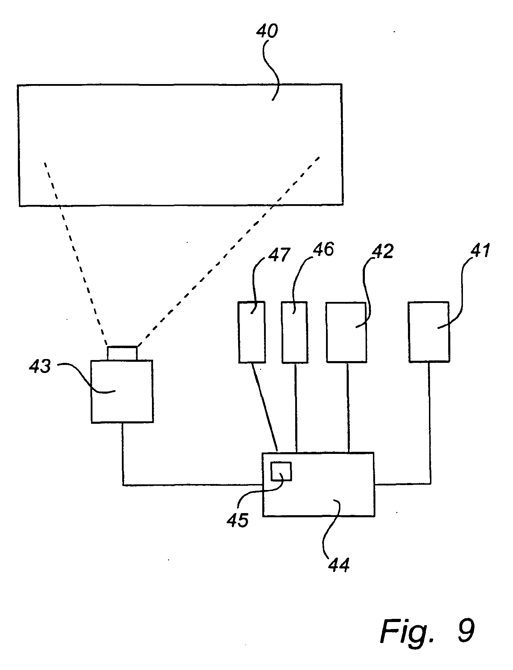

Fig. 9 schematically shows a display system. The system comprises a writing board 40, a first position-sensing device 41 for recording information which is being written on the board 40 by means of a pen associated with the first position-sensing device, a second position-sensing device 42 for recording information which is being erased from the board 40 by means of an eraser associated with the second position-sensing device, as well as projector 43 and an external unit 44 with software for converting recorded positional information into an image or a sequence of images, showing the handwritten information on the writing board in digital form. The writing board 40 and the position-sensing devices 41 and 42 have been explained in detail above. The projector 43 is of the standard type and can carry out all "ordinary" projector tasks. It is connected to a computer, for example the external unit 44, which is provided with software 45 to enable it to create images on the basis of the positional data which is input to the computer.

The following is a simple example of how the units in the system co-operate. Suppose that a lecturer is giving a lecture to an audience in a lecture hall where the above system has been installed and that a student is sitting at home in his room. The lecturer writes the word "HELLO" on the writing board 40 using the device 41. When the lecturer places the pen point on the writing board 40 the device begins to record images of writing board in the current position of the pen. The recording of images takes place continuously and the processor in the device identifies the imaged position-coding pattern in each image. On the basis of each recorded image of the position-coding pattern a pair of coordinates is generated which describes the absolute position on the writing board in which each image is captured, i.e. the current position of the pen. In this way, a description, in the form of a large number of position indications or "points", is obtained of how the pen has been moved across the writing board. This description constitutes a digital representation of the written information. At regular intervals a polynomial is fitted to these points. In the above case, if the lecturer writes carefully, the letter H can, for example, give rise to three first degree polynomials, where each polynomial represents a line segment with specific starting- and terminal points. These polynomials are transferred together with a signal describing the color of the pen by way of radio communication to the external unit 44 in the lecture hall. The external unit is connected to the Internet and the student sitting at home can thus connect to the external unit, either to see the information which is being written on the writing board in real time, or to download the information at a later time. To enable the student sitting at home to derive full benefit from the lecture, the system can also comprise a microphone 46, which records what the lecturer is saying, as well as a camera 47, which films the lecturer from a distance, so that his spoken language and body language, which supplement the notes being written on the writing board, can also be recorded. The communication route via the external unit to the student's home is the same as for the written information and the implementation of the same with regard to sound and image information can easily be achieved by the person skilled in the art.

If the system is used in a meeting with persons who are participating from a distance, a shared writing board can be created on which the remote participants can write as well. More specifically, the remote participants can have the same type of system for recording information which is being written on their writing board. The information from the remote system is transmitted to the external unit 44 in the lecture hall. This unit causes the projector to project the information from the second system onto the writing board in the lecture hall. Correspondingly, the second system can comprise a projector showing the information from the writing board in the lecture hall. The projectors can be calibrated to the writing boards by means of the position-coding pattern, for example, by moving the pen from the upper left corner to the lower right corner of the board. Then the computer and the projector can adapt the projected image to the writing board.

## Claims

1. An eraser, comprising
an erasing surface for erasing information from a writing board (1; 40), and
a device (42) for creating an electronic representation of an erased area on the writing board (1; 40);
**characterized in that**
the device (42) for creating an electronic representation comprises:
a light sensitive detector (14) which is adapted to record a two-dimensional image of a position-coding pattern (3) on the writing board (1; 40) for a current eraser position, the position-coding pattern (3) coding a position in two dimensions, wherein the position-coding pattern comprises dots (7) arranged according to a virtual raster having raster lines, which raster lines define an x-axis and a y-axis of the position-coding pattern,
and a processor (16), which is adapted to interpret the position-coding pattern (3) imaged by the detector (14) and transform it into a coordinate pair of the current position;
said processor (16) being further adapted to detect an angular position of said raster lines in relation to the two-dimensional image recorded by the detector (14);
wherein the processor (16) is adapted to determine said erased area on the writing board (1; 40) based on the current position, the detected angular position and knowledge of the size of the erasing surface of the eraser.

2. The eraser of claim 1, further comprising a communication means (20) which is adapted to transfer positional information based on the position-coding pattern (3) detected by the detector (14) for the current eraser position to at least one external unit (44).

3. The eraser of claim 1 or 2, wherein the device (42) also comprises a memory (17) for storing positional information for successive current positions.

4. The eraser of any one of the preceding claims, wherein the device (42) comprises the erasing surface as an integral part.

## Patentansprüche

1. Löscheinrichtung, umfassend
eine Löschoberfläche zum Löschen von Informationen von einer Schreibtafel (1; 40) und
eine Vorrichtung (42) zum Schaffen einer elektronischen Darstellung eines gelöschten Bereichs auf der Schreibtafel (1; 40);
**dadurch gekennzeichnet, dass**
die Vorrichtung (42) zum Schaffen einer elektronischen Darstellung Folgendes umfasst:
einen lichtempfindlichen Detektor (14), der geeignet ist, ein zweidimensionales Bild eines Positionscodierungsmusters (3) auf der Schreibtafel (1; 40) für eine gegenwärtige Löscheinrichtungsposition aufzuzeichnen, wobei das Positionscodierungsmuster (3) eine Position in zwei Dimensionen codiert, wobei das Positionscodierungsmuster Punkte (7) umfasst, die in Übereinstimmung mit einem virtuellen Raster angeordnet sind, das Rasterlinien aufweist, wobei die Rasterlinien eine X-Achse und eine Y-Achse des Positionscodierungsmusters definieren;
und einen Prozessor, (16), der geeignet ist,
das Positionscodierungsmuster (3), das von dem Detektor (14) abgebildet wird, zu interpretieren und dieses in ein Koordinatenpaar der gegenwärtigen Position umzuwandeln;
wobei der Prozessor (16) ferner geeignet ist, eine Winkelposition der Rasterlinien in Bezug auf das zweidimensionale Bild, das von dem Detektor (14) aufgezeichnet wird, zu erkennen;
wobei der Prozessor (16) geeignet ist, den gelöschten Bereich auf der Schreibtafel (1; 40) basierend auf der gegenwärtigen Position, der erkannten Winkelposition und der Kenntnis der Größe der Löschoberfläche der Löscheinrichtung zu ermitteln.

2. Löscheinrichtung nach Anspruch 1, ferner umfassend ein Kommunikationsmittel (20), das geeignet ist, Positionsinformationen basierend auf dem Positionscodierungsmuster (3), das von dem Detektor (14) für die gegenwärtige Löscheinrichtungsposition erkannt wird, an mindestens eine externe Einheit (44) zu übertragen.

3. Löscheinrichtung nach Anspruch 1 oder 2, wobei die Vorrichtung (42) auch einen Speicher (17) zum Speichern von Positionsinformationen für aufeinanderfolgende gegenwärtige Positionen umfasst.

4. Löscheinrichtung nach einem der vorhergehenden Ansprüche, wobei die Vorrichtung (42) die Löschoberfläche als einen festen Bestandteil umfasst.

## Revendications

1. Effaceur, comprenant
une surface d'effacement pour effacer des informations sur un tableau d'écriture (1 ; 40), et
un dispositif (42) pour créer une représentation électronique d'une zone effacée sur le tableau d'écriture (1 ; 40) ;
**caractérisé en ce que**
le dispositif (42) pour créer une représentation électronique comprend :
un détecteur sensible à la lumière (14) qui est adapté de façon à enregistrer une image bidimensionnelle d'un motif de codage de position (3) sur le tableau d'écriture (1 ; 40) pour une position courante de l'effaceur, ce motif de codage de position (3) codant une position dans deux dimensions, ce motif de codage de position comportant des points (7) disposés selon une trame virtuelle ayant des lignes de trame, lesquelles lignes de trame définissent un axe des x et un axe des y du motif de codage de position,
et un processeur (16), qui est adapté de façon à interpréter le motif de codage de position (3) imagé par le détecteur (14) et à le transformer en une paire de coordonnées de la position courante ;
ledit processeur (16) étant adapté en outre de façon à détecter une position angulaire desdites lignes de trame par rapport à l'image bidimensionnelle enregistrée par le détecteur (14) ;
le processeur (16) étant adapté de façon à déterminer ladite zone effacée sur le tableau d'écriture (1 ; 40) en se basant sur la position courante, la position angulaire détectée et la connaissance de la taille de la surface d'effacement de l'effaceur.

2. Effaceur selon la revendication 1, comprenant en outre un moyen de communication (20) qui est adapté de façon à transférer les informations positionnelles basées sur le motif de codage de position (3) détecté par le détecteur (14) pour la position courante de l'effaceur vers au moins une unité externe (44).

3. Effaceur selon la revendication 1 ou 2, dans lequel le dispositif (42) comprend aussi une mémoire (17) pour stocker les informations positionnelles pour des positions courantes successives.

4. Effaceur selon l'une quelconque des revendications précédentes, dans lequel le dispositif (42) comprend la surface d'effacement comme en faisant partie intégrante.
